# EUROPÄISCHE PATENTSCHRIFT

(11) **EP 2 561 318 B1**
(45) Veröffentlichungstag und Bekanntmachung des Hinweises auf die Patenterteilung: **11.12.2013**
(21) Anmeldenummer: 11709740.2
(22) Anmeldetag: 24.03.2011
(51) Int. Cl.: G01D 3/036

(54) **BAUEINHEIT FÜR EINE WINKELMESSEINRICHTUNG**
ASSEMBLY FOR AN ANGLE-MEASURING DEVICE
UNITÉ CONSTITUTIVE POUR UN DISPOSITIF DE MESURE D'ANGLE

(30) Priorität: 20.04.2010 DE 102010027939
(43) Veröffentlichungstag der Anmeldung: 27.02.2013
(73) Patentinhaber: Dr. Johannes Heidenhain GmbH, 83301 Traunreut (DE)
(72) Erfinder: HUBER, Helmut, 84518 Garching a.d. Alz (DE); HAGER, Andreas, 84558 Kirchweidach (DE)
(86) Internationale Anmeldenummer: PCT/EP2011/054514
(87) Internationale Veröffentlichungsnummer: WO 2011/131449

(56) Entgegenhaltungen:
- EP-A1- 1 505 371
- WO-A2-2009/050441
- US-A- 4 070 759
- US-A1- 2007 089 532
- US-A1- 2008 289 838

## Beschreibung

Die Erfindung betrifft eine Baueinheit für eine Winkelmesseinrichtung gemäß dem Patentanspruch 1.

Winkelmesseinrichtungen, häufig auch Drehgeber genannt, dienen zur Messung von Drehbewegungen eines drehbar gelagerten Maschinenteils, insbesondere einer Welle, über eine oder mehrere Umdrehungen. Die Drehbewegung wird dabei inkremental oder absolut erfasst. In Verbindung mit Zahnstangen und Zahnrädern oder mit Gewindespindeln lassen sich mit einer Winkelmesseinrichtung auch lineare Bewegungen messen. Häufig werden derartige Winkelmesseinrichtungen in Verbindung mit Elektromotoren zur Erzeugung eines Kommutierungssignals verwendet.

In der Regel weisen derartige Baueinheiten für Winkelmesseinrichtungen Maßverkörperungen mit einer Winkelskalierungen auf. Nach erfolgter Montage der Baueinheit auf ein Maschinenteil, z. B. auf eine drehbare Welle, können, während das Maschinenteil Drehbewegungen ausführt, bezüglich der Maßverkörperungen Exzentrizitäts- und Taumelfehler festgestellt werden. Diese Tatsache resultiert daraus, dass die betreffenden Maschinenteile (insbesondere Wellen) Maßtoleranzen aufweisen. Letztlich führen diese Maßtoleranzen zu Messfehlern. Entsprechend der anzustrebenden Messgenauigkeit werden daher vom Hersteller der Winkelmesseinrichtung erforderliche Maßtoleranzen für das Maschinenteil, dessen Drehbewegung bzw. Drehstellung zu bestimmen ist, vorgegeben.

Aus der EP 1 014 044 A1 ist eine selbstzentrierende Baueinheit für eine Winkelmesseinrichtung bekannt, welche einen Nabenschaft aufweist, der durch einen Spannring gegen ein Maschinenteil gedrückt wird.

Eine derartige Anordnung hat den Nachteil, dass bei größeren Maßabweichungen des Maschinenteils nicht vernachlässigbare Messfehler auftreten.

Der Erfindung liegt die Aufgabe zugrunde, eine Baueinheit für eine Winkelmesseinrichtung der eingangs genannten Art zu schaffen, die eine hohe Messgenauigkeit zulässt und zudem zuverlässig auch bei vergleichsweise großen Toleranzen einsetzbar ist.

Diese Aufgabe wird erfindungsgemäß durch die Schaffung einer Baueinheit für eine Winkelmesseinrichtung mit den Merkmalen des Patentanspruchs 1 gelöst.

Demnach umfasst die Baueinheit für eine Winkelmesseinrichtung einen ersten Abschnitt, beispielsweise eine Maßverkörperung, welcher eine Winkelskalierung zur Messung einer Drehbewegung der Baueinheit relativ zu einem weiteren Maschinenteil um eine Achse Z aufweist. Weiterhin umfasst die Baueinheit einen zweiten Abschnitt, etwa eine Montageeinheit, zur Befestigung der Baueinheit an einem Maschinenteil und einen dritten Abschnitt, welcher den ersten Abschnitt mit dem zweiten Abschnitt verbindet, so dass ein Kraftfluss zwischen dem zweiten und den dritten Abschnitt möglich ist. Ferner weist der dritte Abschnitt ein erstes und ein zweites Gelenk auf, wobei das erste Gelenk in Axialrichtung nachgiebig ausgestaltet ist, während das zweite Gelenk in Radialrichtung nachgiebig ausgestaltet ist.

Die Baueinheit ist vorteilhafterweise so konfiguriert, dass zudem das erste Gelenk in Radialrichtung steif ausgestaltet ist, während das zweite Gelenk in Axialrichtung steif ausgestaltet ist.

Die Messung einer Drehbewegung umfasst beispielsweise die Bestimmung einer vorliegenden Drehstellung oder Drehgeschwindigkeit.

Mit Vorteil weist der zweite Abschnitt mehrere in Umfangsrichtung beabstandete Elemente zur Herstellung einer Verbindung, insbesondere einer Klemmverbindung, mit dem Maschinenteil, etwa einer Maschinenwelle, auf. Die Elemente zur Herstellung der Verbindung sind in Radialrichtung federnd beweglich. In weiterer Ausgestaltung der Erfindung weist der zweite Abschnitt mindestens drei in Umfangsrichtung beabstandete Elemente auf. Die Elemente zur Herstellung der Verbindung können beispielsweise Klemmbacken sein, deren nach innen weisende Oberflächen als Kontaktflächen zum Klemmen an dem Maschinenteil geeignet sind.

Vorzugsweise sind das erste Gelenk und / oder das zweite Gelenk als ein Festkörpergelenk ausgebildet. Als Festkörpergelenk ist im Folgenden ein monolithischer Bereich der Baueinheit zu verstehen, welcher durch eine Stelle mit verminderter Biegesteifigkeit definiert werden kann. Die zum Festkörpergelenk benachbarten Zonen können als Starrkörper angesehen werden. Die verminderte Biegesteifigkeit kann durch eine lokale Querschnittsverringerung erzeugt werden. Dabei kann der Querschnitt des ersten Gelenks nur in Axialrichtung verringert sein, so dass das erste Gelenk bezogen auf die Axialrichtung eine Schwachstelle aufweist. Alternativ oder ergänzend kann der Querschnitt des zweiten Gelenks nur in Radialrichtung verringert sein. Entsprechend weist dann das zweite Gelenk bezogen auf die Radialrichtung eine Schwachstelle auf. Derartige Festkörpergelenke arbeiten spielfrei, ohne Verschleiß und ohne Schmierung, so dass Verschmutzungen der Winkelskalierung durch Abriebspartikel oder durch die Anwesenheit von Schmiermittel ausgeschlossen werden können.

Mit Vorteil ist zumindest der dritte Abschnitt der Baueinheit als ein einteiliges Kunststoff-Bauteil ausgebildet, wobei in weiterer Ausgestaltung der Erfindung der zweite und der dritte Abschnitt ein einteiliges Kunststoff-Bauteil bilden können.

Der erste Abschnitt hingegen kann als eine Maßverkörperung, auf welcher die Winkelskalierung aufgebracht ist, insbesondere in Form einer Codescheibe, ausgestaltet sein. Die Winkelskalierung kann im Übrigen so ausgebildet sein, dass durch die Winkelmesseinrichtung inkrementale und / oder absolute Winkelstellungen ausgebbar sind. Die Maßverkörperung kann scheiben- oder ringförmig alternativ auch zylindrisch sein, wobei im letzteren Fall die Winkelskalierung an der Mantelseite der zylindrischen Maßverkörperung angeordnet sein kann.

Der dritte Abschnitt kann eine orthogonal zur Achse orientierte Fügefläche, an welcher der erste Abschnitt bzw. die Maßverkörperung der Baueinheit befestigt ist, aufweisen.

Die erfindungsgemäße Baueinheit kann auch als eine Nabe verstanden werden, welche den zweiten und den dritten Abschnitt sowie die Maßverkörperung mit der Winkelskalierung umfasst, wobei die Maßverkörperung drehstarr am dritten Abschnitt befestigt ist. Die Maßverkörperung ist mit Vorteil aus einem anderen Material, z. B. Glas, hergestellt als der zweite und dritte Abschnitt der Baueinheit, welche mit Vorteil als ein Kunststoffteil ausgebildet sind.

Weitere vorteilhafte Ausgestaltungen der Erfindung sind den abhängigen Ansprüchen zu entnehmen.

Weitere Merkmale und Vorteile der Erfindung werden bei der nachfolgenden Beschreibung zweier Ausführungsbeispiele anhand der Figuren deutlich werden.

Es zeigen die:
- Figur 1: eine Ansicht auf eine Baueinheit einer Winkelmesseinrichtung,
- Figur 2: eine Längsschnittdarstellung der Baueinheit entlang der Linie A-A,
- Figur 3: eine Längsschnittdarstellung einer Baueinheit einer Winkelmesseinrichtung, gemäß einem zweiten Ausführungsbeispiel.

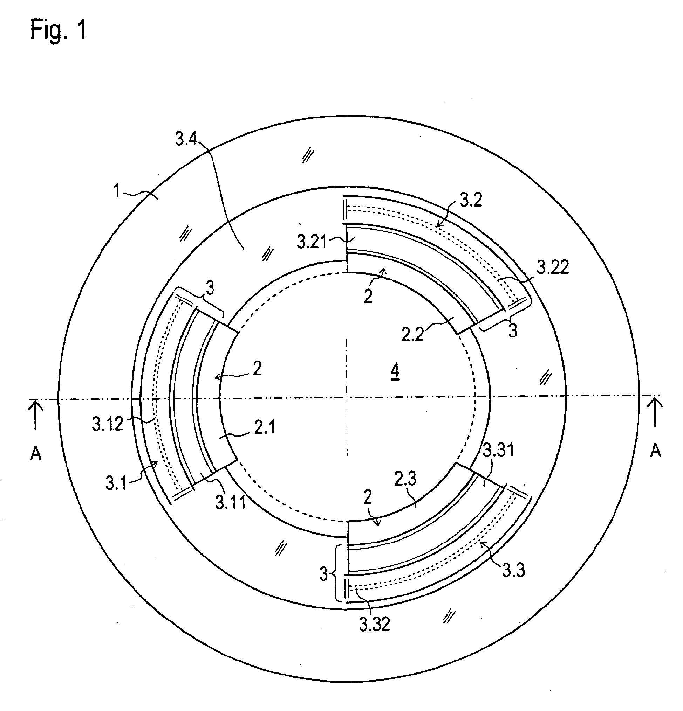

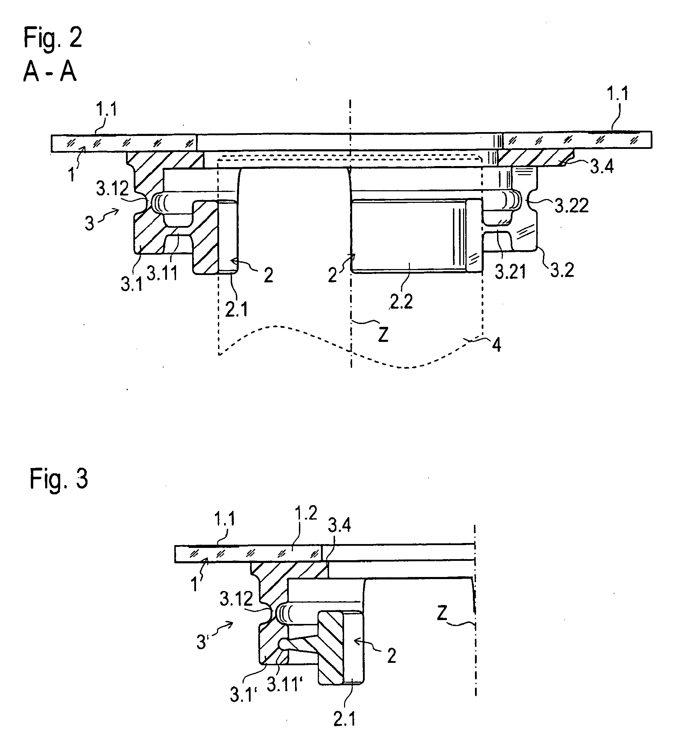

In den Figuren 1 und 2 ist eine beispielhafte Ausführungsform einer erfindungsgemäßen Baueinheit einer Winkelmesseinrichtung dargestellt, wobei in der Figur 2 ein Schnitt entlang der Linie A-A gezeigt ist. Demnach umfasst die Baueinheit einen ersten Abschnitt in Form einer ringförmigen Maßverkörperung 1 aus Glas, auf welcher eine Winkelskalierung 1.1 aufgebracht ist. Die Winkelskalierung 1.1 kann beispielsweise als eine inkrementale Teilung mit radial orientierten Skalenstrichen oder als ein absoluter Code ausgestaltet sein. In der Figur 1, die die Baueinheit in einer Ansicht von unten zeigt, ist die Winkelskalierung 1.1 nicht dargestellt. Zur Messung einer Drehbewegung um eine Achse Z kann dann durch eine geeignete Detektoranordnung die Drehstellung der Baueinheit relativ zur Detektoranordnung bestimmt werden. Derartige Winkelmesseinrichtungen werden auch häufig als Drehgeber bezeichnet.

Ein zweiter Abschnitt der Baueinheit ist als eine Montageeinheit 2 ausgestaltet und weist drei in Umfangsrichtung gleichmäßig beabstandete Elemente 2.1, 2.2, 2.3 auf. Diese Elemente 2.1, 2.2, 2.3, die als Klemmbacken ausgeführt sind, sind geometrisch betrachtet Segmente eines Hohlzylinders, die in Umfangsrichtung jeweils um 120° versetzt angeordnet sind. Entsprechend weisen diese radial innen eine gemeinsame kreisförmige bzw. zylindrische Kontur auf und dienen zur Herstellung einer klemmenden Verbindung der Baueinheit mit einem Maschinenteil 4, beispielsweise an einer Motorwelle, deren Drehbewegung bzw. Drehstellung gemessen werden soll. Das Maschinenteil 4 ist im Übrigen in den Figuren 1 und 2 mit gestrichelten Linien dargestellt.

Die Baueinheit umfasst zudem einen dritten Abschnitt 3, welcher zwischen der Maßverkörperung 1 und der Montageeinheit 2 angeordnet ist, also den ersten Abschnitt mit dem zweiten Abschnitt mechanisch verbindet. Zur Befestigung der Maßverkörperung 1 umfasst der dritte Abschnitt 3 einen ringförmigen Bereich 3.4. Dieser ringförmige Bereich 3.4 weist eine orthogonal zur Achse Z orientierte Fügefläche auf. An dieser ist die Maßverkörperung 1 am dritten Abschnitt 3 durch eine Klebung fest und nur mit geringer Toleranz zentrisch bezüglich der Achse Z verbunden.

Außerdem weist der dritte Abschnitt 3 ebenfalls drei über den Umfang versetzte Elemente 3.1, 3.2, 3.3 auf. Jedes dieser Elemente 3.1, 3.2, 3.3 verfügt über je ein erstes und ein zweites Gelenk 3.11, 3.21, 3.31; 3.12, 3.22, 3.32. Im vorgestellten Ausführungsbeispiel sind sowohl die ersten Gelenke 3.11, 3.21, 3.31 als auch die zweiten Gelenke 3.12, 3.22, 3.32 als Festkörpergelenke ausgebildet, wobei die ersten Gelenke 3.11, 3.21, 3.31 bezogen auf die Axialrichtung und die zweiten Gelenke 3.12, 3.22, 3.32 bezogen auf die Radialrichtung eine Schwachstelle aufweisen. Demnach ist jeweils das erste Gelenk 3.11, 3.21, 3.31 in Axialrichtung und das zweite Gelenk 3.12, 3.22, 3.32 in Radialrichtung nachgiebig ausgestaltet. Durch die Verwendung von Festköpergelenken bilden die Montageeinheit 2 und der dritte Abschnitt 3 ein einteiliges Kunststoff-Bauteil, das mit einem Spritzgussverfahren hergestellt ist.

Der Abstand, bzw. der umschlossene Innendurchmesser der drei Elemente 2.1, 2.2, 2.3 der Montageeinheit 2 ist so bemessen, dass dieser geringfügig kleiner ist als der Außendurchmesser des Maschinenteils 4. Im Zuge der Montage wird die Baueinheit auf das Maschinenteil 4 geschoben, so dass unter elastischer Verformung der Baueinheit die Elemente 2.1, 2.2, 2.3 der Montageeinheit 2 radial nach außen gedrängt werden, so dass die Baueinheit am Maschinenteil 4 geklemmt ist. Gegebenenfalls kann auch ein Kleber an den Elemente 2.1, 2.2, 2.3 der Montageeinheit 2 und dem Maschinenteil 4 aufgetragen werden, so dass ein Klebeverbund zwischen der Montageeinheit 2 und dem Maschinenteil 4 vorliegt.

Um die Toleranzen bezüglich des Außendurchmessers des Maschinenteils 4 möglichst groß wählen zu können, sind die zweiten Gelenke 3.12, 3.22, 3.32 vorgesehen, welche durch ihre Nachgiebigkeit in Radialrichtung Durchmesserabweichungen verschiedener Maschinenteile 4 vergleichsweise großzügig auszugleichen vermögen. Entsprechend weist die Baueinheit eine selbstzentrierende Eigenschaft auf.

Durch die ersten Gelenke 3.11, 3.21, 3.31 ist weiterhin sichergestellt, dass sich die Innenflächen der Elemente 2.1, 2.2, 2.3 der Montageeinheit 2, also die Klemmbacken, parallel zur Außenfläche des Maschinenteils 4 ausrichten und die Maßverkörperung 1 und damit die Winkelskalierung 1.1 in einer Ebene orthogonal zur Achse Z zu liegen kommt.

Somit kann die erfindungsgemäße Baueinheit durch ihre selbstzentrierende Eigenschaft präzise montiert werden, so dass Exzentrizitätsfehler oder Taumelfehler auch bei relativ groben Toleranzvorgaben weitgehend eliminiert werden. Im Ergebnis führt dies zu einer Erhöhung der Messgenauigkeit der betreffenden Winkelmesseinrichtung.

In der Figur 3 ist analog zur Figur 2 eine Schnittdarstellung gezeigt, die eine entsprechende Baueinheit gemäß einem zweiten Ausführungsbeispiel darstellt. Als wesentlicher Unterschied zum ersten Ausführungsbeispiel ist die Baueinheit nunmehr so konstruiert, dass das Element 3.1' im dritten Abschnitt 3' ein erstes Gelenk 3.11' aufweist, das als ein Kugelgelenk ausgestaltet ist. Wenngleich in der Figur 3 nur das eine Element 3.1' des dritten Abschnitts 3' dargestellt ist, weist der dritte Abschnitt 3' der Baueinheit gemäß dem zweiten Ausführungsbeispiel ebenfalls insgesamt drei über dem Umfang versetzte Elemente und damit insgesamt sechs Gelenke auf.

## Patentansprüche

1. Baueinheit für eine Winkelmesseinrichtung umfassend
- einen ersten Abschnitt (1), welcher eine Winkelskalierung (1.1) zur Messung einer Drehbewegung um eine Achse (Z) aufweist,
- einen zweiten Abschnitt (2) zur Befestigung der Baueinheit an einem Maschinenteil (4), und
- einen dritten Abschnitt (3, 3'), welcher den ersten Abschnitt (1) mit dem zweiten Abschnitt (2) verbindet,
**dadurch gekennzeichnet, dass** der dritte Abschnitt (3, 3') ein erstes und ein zweites Gelenk (3.11, 3.21, 3.31; 3.11'; 3.12, 3.22, 3.32) aufweist, wobei das erste Gelenk (3.11, 3.21, 3.31; 3.11') in Axialrichtung nachgiebig ausgestaltet ist, während das zweite Gelenk (3.12, 3.22, 3.32) in Radialrichtung nachgiebig ausgestaltet ist.

2. Baueinheit gemäß dem Anspruch 1, **dadurch gekennzeichnet, dass** der zweite Abschnitt (2) mehrere in Umfangsrichtung beabstandete Elemente (2.1, 2.2, 2.3) aufweist, zur Herstellung einer Verbindung mit dem Maschinenteil (4).

3. Baueinheit gemäß dem Anspruch 2, **dadurch gekennzeichnet, dass** der zweite Abschnitt (2) mindestens drei in Umfangsrichtung beabstandete Elemente (2.1, 2.2, 2.3) aufweist.

4. Baueinheit gemäß einem der vorhergehenden Ansprüche, **dadurch gekennzeichnet, dass** das erste Gelenk (3.11, 3.21, 3.31) und / oder das zweite Gelenk (3.12, 3.22, 3.32) als ein Festkörpergelenk ausgebildet sind.

5. Baueinheit gemäß dem Anspruch 4, **dadurch gekennzeichnet, dass** das erste Gelenk (3.11, 3.21, 3.31) als ein Festkörpergelenk ausgebildet ist, welches bezogen auf die Axialrichtung eine Schwachstelle aufweist.

6. Baueinheit gemäß dem Anspruch 4 oder 5, **dadurch gekennzeichnet, dass** das zweite Gelenk (3.12, 3.22, 3.32) als ein Festkörpergelenk ausgebildet ist, welches bezogen auf die Radialrichtung eine Schwachstelle aufweist.

7. Baueinheit gemäß einem der vorhergehenden Ansprüche, **dadurch gekennzeichnet, dass** der zweite und der dritte Abschnitt (2, 3) ein einteiliges Kunststoff-Bauteil bilden.

8. Baueinheit gemäß einem der vorhergehenden Ansprüche, **dadurch gekennzeichnet, dass** der erste Abschnitt (1) als eine Maßverkörperung, insbesondere in Form einer Codescheibe, ausgestaltet ist.

9. Baueinheit gemäß dem Anspruch 8, **dadurch gekennzeichnet, dass** der dritte Abschnitt (3, 3') eine orthogonal zur Achse (Z) orientierte Fügefläche aufweist, an welcher der erste Abschnitt (1) der Baueinheit befestigt ist.

## Claims

1. Assembly for an angle-measuring device, comprising
- a first section (1) which has an angle scale (1.1) for measuring a rotational movement about an axis (Z),
- a second section (2) for fastening the assembly to a machine part (4), and
- a third section (3, 3') which connects the first section (1) to the second section (2),
**characterized in that** the third section (3, 3') has a first and a second joint (3.11, 3.21, 3.31; 3.11'; 3.12, 3.22, 3.32), wherein the first joint (3.11, 3.21, 3.31; 3.11') is configured to be flexible in the axial direction whereas the second joint (3.12, 3.22, 3.32) is configured to be flexible in the radial direction.

2. Assembly according to Claim 1, **characterized in that** the second section (2) has a plurality of elements (2.1, 2.2, 2.3) spaced apart in the circumferential direction, for producing a connection to the machine part (4).

3. Assembly according to Claim 2, **characterized in that** the second section (2) has at least three elements (2.1, 2.2, 2.3) spaced apart in the circumferential direction.

4. Assembly according to one of the preceding claims, **characterized in that** the first joint (3.11, 3.21, 3.31) and/or the second joint (3.12, 3.22, 3.32) are/is designed as a solid joint.

5. Assembly according to Claim 4, **characterized in that** the first joint (3.11, 3.21, 3.31) is designed as a solid joint which has a weak point with respect to the axial direction.

6. Assembly according to Claim 4 or 5, **characterized in that** the second joint (3.12, 3.22, 3.32) is designed as a solid joint which has a weak point with respect to the radial direction.

7. Assembly according to one of the preceding claims, **characterized in that** the second and the third section (2, 3) form a single-part plastics component.

8. Assembly according to one of the preceding claims, **characterized in that** the first section (1) is configured as a measurement standard, in particular in the form of a code disc.

9. Assembly according to Claim 8, **characterized in that** the third section (3, 3') has a joining surface which is oriented orthogonally to the axis (Z) and to which the first section (1) of the assembly is fastened.

## Revendications

1. Unité constitutive pour un dispositif de mesure d'angle, comportant
- une première portion (1), laquelle comprend une graduation angulaire (1.1) pour la mesure d'un déplacement rotatif autour d'un axe (Z),
- une deuxième portion (2) pour la fixation de l'unité constitutive à une partie de machine (4) et
- une troisième portion (3, 3'), laquelle relie la première portion (1) à la deuxième portion (2),
**caractérisée en ce que** la troisième portion (3, 3') comprend une première et une deuxième articulation (3.11, 3.21, 3.31 ; 3.11' ; 3.12, 3.22, 3.32), la première articulation (3.11, 3.21, 3.31 ; 3.11') étant configurée de manière souple dans la direction axiale, tandis que la deuxième articulation (3.12, 3.22, 3.32) est configurée de manière souple dans la direction radiale.

2. Unité constitutive selon la revendication 1, **caractérisée en ce que** la deuxième portion (2) comprend plusieurs éléments (2.1, 2.2, 2.3) espacés dans la direction périphérique, pour la réalisation d'une liaison à la partie de machine (4) .

3. Unité constitutive selon la revendication 2, **caractérisée en ce que** la deuxième portion (2) comprend au moins trois éléments (2.1, 2.2, 2.3) espacés dans la direction périphérique.

4. Unité constitutive selon l'une quelconque des revendications précédentes, **caractérisée en ce que** la première articulation (3.11, 3.21, 3.31) et/ou la deuxième articulation (3.12, 3.22, 3.32) est/sont réalisée(s) sous forme d'articulation(s) monolithique(s).

5. Unité constitutive selon la revendication 4, **caractérisée en ce que** la première articulation (3.11, 3.21, 3.31) est réalisée sous forme d'articulation monolithique, laquelle présente un point d'affaiblissement par rapport à la direction axiale.

6. Unité constitutive selon la revendication 4 ou 5, **caractérisée en ce que** la deuxième articulation (3.12, 3.22, 3.32) est réalisée sous forme d'articulation monolithique, laquelle présente un point d'affaiblissement par rapport à la direction radiale.

7. Unité constitutive selon l'une quelconque des revendications précédentes, **caractérisée en ce que** la deuxième et la troisième portion (2, 3) forment un composant en plastique d'une seule partie.

8. Unité constitutive selon l'une quelconque des revendications précédentes, **caractérisée en ce que** la première portion (1) est configurée sous forme de mesure matérialisée, en particulier sous la forme d'un disque codeur.

9. Unité constitutive selon la revendication 8, **caractérisée en ce que** la troisième portion (3, 3') comprend une surface d'assemblage orientée de manière orthogonale à l'axe (Z) et à laquelle est fixée la première portion (1) de l'unité constitutive.
